# EUROPÄISCHE PATENTSCHRIFT

(11) **EP 0 907 556 B1**
(45) Veröffentlichungstag und Bekanntmachung des Hinweises auf die Patenterteilung: **26.09.2001**
(21) Anmeldenummer: 97929132.5
(22) Anmeldetag: 18.06.1997
(51) Int. Cl.: B63H 23/24, B63H 20/32, H02K 9/19, H02K 9/08

(54) **GONDELARTIG ANZUORDNENDER SCHIFFSANTRIEB MIT SYNCHRONMOTOR**
POD-LIKE SHIP PROPULSION SYSTEM WITH SYNCHRONOUS MOTOR
MECANISME DE PROPULSION DE NAVIRE EN FUSEAU AVEC MOTEUR SYNCHRONE

(30) Priorität: 26.06.1996 DE 19627323
(43) Veröffentlichungstag der Anmeldung: 14.04.1999
(73) Patentinhaber: SIEMENS AKTIENGESELLSCHAFT, 80333 München (DE)
(72) Erfinder: HEIN, Peter, D-13629 Berlin (DE); MEYER, Christian, D-13349 Berlin (DE)
(86) Internationale Anmeldenummer: DE9701292
(87) Internationale Veröffentlichungsnummer: WO9749605

(56) Entgegenhaltungen:
- EP-A- 0 523 353
- EP-A- 0 548 733
- DE-A- 3 632 645
- DE-A- 4 213 132
- DE-C- 917 475
- NL-A- 8 802 686
- US-A- 5 403 216
- H. BÖNNING ET AL. : "Der MEP-Motor, ein permanenterregter Fahrmotor für den Schiffsbetrieb" JAHRBUCH DER SCHIFFBAUTECHNISCHEN GESELLSCHAFT, Bd. 81, 1988, BERLIN DE, Seiten 229-234, XP002043269
- K. MAGENS: "Permasyn - Ein permanenterregter Synchronmotor für den Schiffsbetrieb" JAHRBUCH DER SCHIFFBAUTECHNISCHEN GESELLSCHAFT, Bd. 81, 1988, BERLIN DE, Seiten 221-227, XP002043270
- H. WEH: "Die Transversalflussmaschine" JAHRBUCH DER SCHIFFBAUTECHNISCHEN GESELLSCHAFT, Bd. 86, 1992, BERLIN DE, Seiten 68-73, XP002043271
- J. HEINEMANN: "Elektrischer Motorpropeller - Stand der Entwicklung und Anwendung" JAHRBUCH DER SCHIFFBAUTECHNISCHEN GESELLSCHAFT, Bd. 86, 1992, BERLIN DE, Seiten 88-94, XP002043272
- PATENT ABSTRACTS OF JAPAN Nr. 397 (E-672) 21 Oktober 1998 & JP 63 140 643 A (EBARA CORP) 13 Juni 1988

## Beschreibung

Die Erfindung liegt auf dem Gebiet der Schiffsantriebe und ist bei der konstruktiven Ausgestaltung eines Drehstrommotors anzuwenden, der sich zum Zwecke des direkten Antriebes wenigstens eines Propellers in einem strömungsgünstig gestalteten Gehäuseteil eines an der Unterseite des Schiffsrumpfes anzuordnenden Gehäuses befindet.

Bei einem bekannten Schiffsantrieb dieser Art ist als Motor ein dreiphasiger Wechselstrommotor mit einem Kurzschlußläufer verwendet, wobei der Läufer auf einer Hohlwelle aufsitzt, die ihrerseits über eine Kupplung mit der innerhalb der Hohlwelle veraufenden Antriebswelle gekoppelt ist. Die Antriebswelle ist direkt mit dem Propeller gekoppelt. Bei diesem Schiffsantrieb ist der Stator des Motors von einem rohrförmigen Gehäuse umgeben, das seinerseits in ein rohrsattelartiges Gehäuseteil des an der Unterseite des Schiffsrumpfes befestigten, gondelartigen Gehäuses eingefügt ist. Die Kühlung des Motors einschließlich der Lager des Läufers erfolgt mit Frischwaser, das aus einem im Schiffsrumpf angeordneten Tank in das Innere des Motorgehäuses gepumpt und im Kreislauf geführt wird (USA 2 714 866).

Bei einem ähnlich aufgebauten Schiffsantrieb ist der Stator des Drehstrommotors zur Kühlung durch das das strömungsgünstig gestaltete Gehäuseteil umströmende Wasser formschlüssig in dieses Gehäuseteil eingepaßt. Dabei ist der Innenraum des den Drehstrommotor aufnehmenden Gehäuseteiles mit unter Druck stehendem Wasser gefüllt. Dieses Wasser dient der Lagerschmierung und der Wärmeübertragung (DE-C-917 475).

Bei einem anderen bekannten Schiffsantrieb dieser Art, der für Antriebsleistungen von 10 MW und mehr ausgelegt werden kann, stützt sich der dynamoelektrische Motor mit seinem Stator über radial angeordnete Stegbleche in dem umgebenden Gehäuse ab; die hierzu verwendeten Stegbleche dienen zugleich zur Ausbildung von Kühlkanälen für ein aus dem Schiffsrumpf heraus zugeführtes gasförmiges Kühlmittel. - Als Motor wird üblicherweise ein Synchronmotor mit einem Kurzschlußläufer verwendet, wobei der Läufer durch Anordnung auf der hohl ausgebildeten, von Wasser durchströmten Antriebswelle zusätzlich gekühlt werden kann. Bei einer derartigen Antriebseinrichtung ist man im übrigen bemüht, das Verhältnis zwischen dem maximalen Durchmesser des Antriebsgehäuses und dem Propellerdurchmesser kleiner als 0,65 zu wählen, vorzugsweise in den Bereich 0,4 bis 0,5 zu legen. Hierbei ist zu berücksichtigen, daß der Propellerdurchmesser nicht beliebig groß gewählt werden kann. - Das genannte Verhältnis der Außendurchmesser beinflußt den Propulsionswirkungsgrad; dieser ist umso größer, je kleiner das genannte Durchmesserverhältnis ist (USA 5 403 216; Publikation "A new generation of standard dieselelektric RoRo ferry" der Fa. Kv&rner Masa-Yard auf der Tagung "RoRo 94" am 27.04.1994 in Gothenburg, DK).

Ausgehend von einem Schiffsantrieb mit den Merkmalen des Oberbegriffes des Patentanspruches 1 (DE-C-917 475) liegt der Erfindung die Aufgabe zugrunde, einen solchen Antrieb für Antriebsleistungen in MW-Bereich auszulegen und dabei einen günstigen Propulsionswirkungsgrad zu gewährleisten.

Zur Lösung dieser Aufgabe ist gemäß der Erfindung vorgesehen, daß der Drehstrommotor als Synchronmotor ausgebildet ist und eine Antriebsleistung von wenigstens 2 MW aufweist, daß der Läufer (10) des Synchronmotors als permanentmagneterregter Läufer ausgebildet ist und daß der Innenraum des den Synchronmotor aufnehmenden Gehäuseteilen frei von einem strömenden Kühlmittel ist.

Bei einer derartigen Ausgestaltung der Antriebseinrichtung sind durch die Verwendung eines Synchronmotors mit einem praktisch keine Stromwärmeverluste erzeugenden permanentmagneterregten Läufer für die Kühlung des Antriebsmotors keine zusätzlichen Kühlmaßnahmen zu ergreifen; da ein permanentmagneterregter Läufer radial weniger aufträgt als ein Kurzschlußläufer, ist zugleich der radiale Raumbedarf des Antriebsmotors verringert. Dies führt zu einem günstigen Verhältnis zwischen Außendurchmesser des Antriebsgehäuses und Außendurchmesser des Propellers, so daß die Antriebseinrichtung einen für Schiffsantriebe dieser Größenordnung hervorragenden Antriebswirkungsgrad aufweist. Insbesondere lassen sich bei Anwendung der erfindungsgemäßen Maßnahmen Schiffsantriebe konstruieren, bei denen das Verhältnis von Außendurchmesser des strömungsgünstig gestalteten Gehäuseteiles zum Außendurchmesser des Propellers kleiner oder höchstens gleich 0,4 ist.

Die Verwendung von permanentmagneterregten Läufern anstelle von Kurzschlußläufern oder von über Schleifringe fremderregten Läufern ist bei Synchronmotoren ist an sich bekannt, insbesondere für elektrische Maschinen mit Antriebsleistungen bis etwa 30 kW (Siemens-Z., 1975, Heft 49, S. 368 - 374) . Derartige Motoren mit Antriebsleistungen von etwa 2 bis 5 MW hat man auch schon für U-Boot-Propellerantriebe konzipiert, wobei der axial sehr kurz und damit bezüglich seines Außendurchmessers relativ groß ausgebildete Motor innerhalb des Schiffsrumpfes angeordnet ist. Bei diesem Motor sind die Polschuhe des Läufers aus jeweils mehreren Permanentmagneten aus einer speziellen Samarium-Kobalt-Legierung aufgebaut und mit dem Polschaft verklebt. Das Ständerblechpaket dieses Motors ist von zwei Kühlringen umgeben, die von Frischwasser durchströmt werden. Das Frischwasser wird in Wärmetauschern durch Seewasser rückgekühlt (Prospekt " PERMASYN-Motoren für U-BootPropellerantriebell der Siemens AG, Bestell-Nr. E 10 001-A930-A29, "Jahrbuch der Schiffbautechnischen Gesellschaft", 1987, S. 221 bis 227).).

Wenn ein gemäß der Erfindung ausgebildeter Schiffsantrieb im oberen Leistungsbereich (mehr als 5 bis 10 MW) eingesetzt wird, ist auch auf eine wirksame Kühlung der Wickelköpfe zu achten. Es kann dann zweckmäßig sein, jedem Wickelkopf des Stators eine zusätzliche Kühleinrichtung zuzuordnen. Diese zusätzlichen Kühleinrichtungen lassen sich in dem durch die Motorkonstruktion ohnehin vorhandenen Innenraum ohne besonderen zusätzlichen Aufwand anordnen, wenn man als Kühleinrichtungen entweder Lüfter wählt, die innerhalb der Wickelköpfe auf der Läuferwelle angeordnet sind, oder wenn man jedem Wikkelkopf stirnseitig einen im Querschnitt rohrförmigen Ring zuordnet, der mit Sprühlöchern versehen ist und dessen Innenraum mittels einer Pumpe an einen unterhalb der Läuferwelle befindlichen Isolieröl-Sumpf angeschlossen ist. In beiden Varianten wird dem Kühlmittel - sei es Luft oder Isolieröl - in gleicher Weise wie dem Stator über die umgebende Gehäusewand des Motors Wärme entzogen.

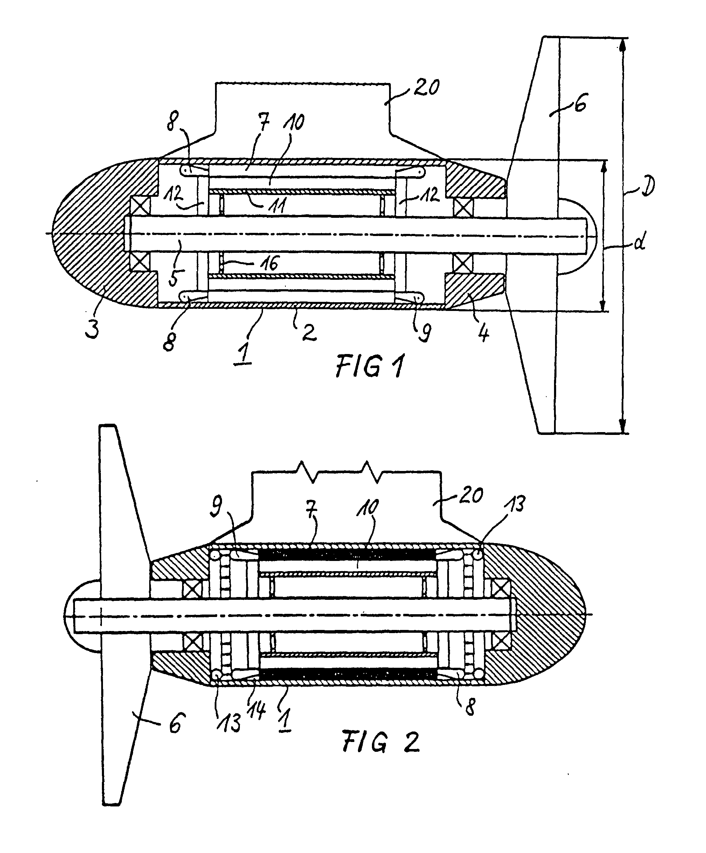

Jeweils ein Längsschnitt durch zwei Ausführungsbeispiele der neuen Antriebseinrichtung sind in den Figuren 1 und 2 schematisch dargestellt.

Dabei zeigt
- Figur 1: eine Antriebseinrichtung mit Luftkühlung der Wikkelköpfe des Stators und
- Figur 2: eine Antriebseinrichtung mit Sprühkühlung der Wikkelköpfe.

Die Antriebseinrichtung gemäß Figur 1 besteht aus einem strömungsgünstig gestalteten, die Form einer Gondel aufweisenden Gehäuseteil 1 mit einem darin angeordneten, aus Stator 7 und Läufer 10 bestehenden Synchronmotor und einem Schaft 20, über den die Antriebseinrichtung am Boden eines Schiffsrumpfes gondelartig befestigt werden kann. Das Gehäuseteil 1 besteht aus dem hohlzylindrischen Teil 2 und den Endkappen 3 und 4, die die Lager der Antriebswelle 5 tragen. An dem einen Ende der Antriebswelle ist der Propeller 6 angeordnet.

Der Stator 7 des Synchronmotors ist formschlüssig in das hohlzylindrische Teil 2 eingepaßt, beispielsweise ist dieses Teil des Gehäuses 1 auf das Statorblechpaket aufgeschrumpft. Die Wicklungen des Stators werden in den Wickelköpfen 8 und 9 sichtbar. Der Läufer 10 des Synchronmotors ist in an sich bekannter Weise als permanentmagneterregter Läufer ausgebildet und ruht mittels einer Tragkonstruktion 11 auf der Antriebswelle 5. Die Tragkonstruktion 11 ist mit axialen Durchbrechungen 16 versehen.

Innerhalb der beiden Wickelköpfe 8 und 9 ist auf der Antriebswelle 5 jeweils ein Lüfter 12 angeordnet. Mit Hilfe dieses Lüfters wird die im Innenraum des Synchronmotors befindliche Luft durcheinander gewirbelt und umströmt dabei die Wickelköpfe 8 und 9. Die Kühlung des Synchronmotors als Ganzes erfolgt im wesentlichen über das hohlzylindrische Teil 2 des Gehäuses 1, das bei der Fahrt des Schiffes die Wärme an das umströmende Wasser abgibt.

Bei dem Ausführungsbeispiel gemäß Figur 2 ist zur Kühlung der Wickelköpfe 8 und 9 stirnseitig zu den Wickelköpfen jeweils ein im Querschnitt rohrförmiger Ring 13 angeordnet, der in Richtung auf die Wickelköpfe mit Sprühöffnungen versehen ist. Über diese Sprühöffnungen kann Isolieröl versprüht werden, das sich als Sumpf 14 unterhalb der Antriebswelle 5 befindet und von dort jeweils mittels einer außerhalb des Gehäuseteiles 1 angeordneten Pumpe in den Ring 13 gepumpt wird. Dem Sumpf 14 aus Isolieröl wird die Wärme ebenfalls über das Gehäuse 1 entzogen, wie auch der gemäß Figur 1 verwirbelten Luft. - Der Sumpf 14 sollte nicht den Luftspalt des Motors erfassen. - Die Sprühringe 13 können zusätzlich oder alternativ zu den Lüftern 12 vorgesehen sein.

Dadurch, daß der Synchronmotor mit seinem Stator formschlüssig in das strömungsgünstig gestaltete Gehäuseteil 1 eingefügt ist und der permanenterregte Läufer 10 radial weniger Platz beansprucht als ein Kurzschlußläufer, kann das Gehäuseteil 1 einen relativ kleinen Außendurchmesser d aufweisen, so daß das Verhältnis zwischen dem Außendurchmesser d des Gehäuseteiles 1 und dem Außendurchmesser D des Propellers 6 einen relativ kleinen Wert von beispielsweise 0,35 erreicht, auch wenn der Synchronmotor für eine Antriebsleistung von 2 bis 20 MW und mehr ausgelegt ist.

Die Ausgestaltung der neuen Antriebseinrichtung ist unabhängig davon, ob die Gondel am Schiffsrumpf starr oder drehbar angeordnet ist. Sie ist somit auch für sogenannte Schottelantriebe geeignet.

## Patentansprüche

1. Elektrische Antriebseinrichtung für ein Schiff,
bestehend aus einem an der Unterseite des Schiffsrumpfes gondelartig anzuordnenden Gehäuse mit einem strömungsgünstig gestalteten Gehäuseteil zur Aufnahme eines Drehstrommotors, an dessen den Läufer tragender Welle wenigstens ein Propeller angekoppelt ist,
wobei der Stator des Drehstrommotors zur Kühlung durch das das strömungsgünstig gestaltete Gehäuseteil umströmende Wasser formschlüssig in das Gehäuseteil (1) eingepaßt ist,
**dadurch gekennzeichnet**
**daß** der Drehstrommotor als Synchronmotor ausgebildet ist und eine Antriebsleistung von wenigstens 2 MW aufweist,
**daß** der Läufer (10) des Synchronmotors als permanentmagneterregter Läufer ausgebildet ist
**und daß** der Innenraum des den Synchronmotor aufnehmenden Gehäuseteiles (1) frei von einem strömenden Kühlmittel ist.

2. Antriebseinrichtung nach Anspruch 1,
**dadurch gekennzeichnet**
**daß** jedem Wickelkopf (8,9) des Stators (7) eine zusätzliche Kühleinrichtung (12,13) zugeordnet ist.

3. Antriebseinrichtung nach Anspruch 2,
**dadurch gekennzeichnet**
**daß** die zusätzliche Kühleinrichtung aus einem innerhalb des jeweiligen Wickelkopfes (8,9) auf der Läuferwelle (5) angordneten Lüfter (12) besteht.

4. Antriebseinrichtung nach Anspruch 2,
**dadurch gekennzeichnet**
**daß** jedem Wickelkopf (8,9) stirnseitig ein im Querschnitt rohrförmiger Ring (13) zugeordnet ist, der mit Sprühlöchern versehen ist und dessen Innenraum mittels einer Pumpe (15) an einen unterhalb der Läuferwelle befindlichen Isolieröl-Sumpf (14) angeschlossen ist.

5. Antriebseinrichtung nach einem der Ansprüche 1 bis 4,
**dadurch gekennzeichnet,**
**daß** der Außendurchmesser (d) des strömungsgünstig gestalteten Gehäuseteiles (1) höchstens 40 % des Außendurchmessers (D) des Propellers (6) beträgt.

6. Antriebseinrichtung nach einem der Ansprüche 1 bis 5,
**dadurch gekennzeichnet,**
**daß** ein hohlzylindrisches Teil (2) des Gehäuseteiles (1) auf das Statorblechpaket (7) aufgeschrumpft ist.

## Claims

1. Electrical propulsion device for a ship, consisting of a housing which to be arranged on the underside of the ship's hull in the manner of a pod having a housing portion that is configured in a favourable manner in terms of flow to accommodate a three-phase motor, coupled to the shaft of which, supporting the rotor, there is at least one propeller, with the stator of the three-phase motor, for the purpose of achieving cooling by means of the water flowing around the housing portion that is configured in a favourable manner in terms of flow, being fitted into the housing portion (1) in a form-locking manner, **characterised in that** the three-phase motor is formed as a synchronous motor and has a propulsive output of at least 2 MW, **in that** the rotor (10) of the synchronous motor is formed as a permanent-magnet rotor, **and in that** the interior space of the housing portion (1), which accommodates the synchronous motor, is free of a flowing coolant.

2. Propulsion device according to claim 1, **characterised in that** associated with each winding head (8, 9) of the stator (7) there is an additional cooling device (12, 13).

3. Propulsion device according to claim 2, **characterised in that** the additional cooling device consists of a fan (12) which is arranged within the respective winding head (8, 9) on the rotor shaft (5).

4. Propulsion device according to claim 2, **characterised in that** associated with each winding head (8, 9) on the face there is a ring (13) that is tubular in cross section and which is provided with spray holes and the interior space of which is connected by means of a pump (15) to an insulating-oil sump (14) which is located underneath the rotor shaft.

5. Propulsion device according to one of claims 1 to 4, **characterised in that** the outside diameter (d) of the housing portion (1) that is configured in a favourable manner in terms of flow amounts to at most 40% of the outside diameter (D) of the propeller (6).

6. Propulsion device according to one of claims 1 to 5, **characterised in that** a hollowly cylindrical portion (2) of the housing portion (1) is shrunk onto the stator laminated core (7).

## Revendications

1. Dispositif électrique de propulsion d'un navire constitué d'une enveloppe, monté en nacelle sur la face inférieure de la coque du navire et ayant une partie conformée de manière hydrodynamique de réception d'un moteur triphasé, à l'arbre duquel portant le rotor, est couplée au moins une hélice,
le stator du moteur triphasé étant adapté à complémentarité de forme dans la partie (1) d'enveloppe, pour le refroidissement par l'eau passant autour de la partie d'enveloppe à conformation hydrodynamique,
**caractérisé**
**en ce que** le moteur triphasé est constitué en moteur synchrone et a une puissance de propulsion d'au moins 2 MW,
**en ce que** le rotor (10) du moteur synchrone est constitué en rotor à aimant permanent,
**et en ce que** l'intérieur de la partie (1) d'enveloppe de réception du moteur synchrone est exempt d'agent de refroidissement en écoulement.

2. Dispositif de propulsion suivant la revendication 1,
**caractérisé**
**en ce qu**'à chaque tête (8, 9) de bobine du stator est associé un dispositif (12, 13) supplémentaire de refroidissement.

3. Dispositif de propulsion suivant la revendication 2,
**caractérisé**
**en ce que** le dispositif supplémentaire de refroidissement est constitué d'un ventilateur (10) monté sur l'arbre (5) du rotor, à l'intérieur de la tête (8, 9) de bobine respective.

4. Dispositif de propulsion suivant la revendication 2,
**caractérisé**
**en ce qu**'à chaque tête (8, 9) de bobine est associé du côté frontal, un anneau (13) de forme tubulaire en section transversale, qui est muni d'orifices de projection et dont l'intérieur est raccordé au moyen d'une pompe (15) à une réserve (14) d'huile isolante se trouvant en dessous de l'arbre du rotor.

5. Dispositif de propulsion suivant l'une des revendications 1 à 4,
**caractérisé**
**en ce que** le diamètre (d) extérieur de la partie (1) d'enveloppe de forme hydrodynamique, représente au plus 40 % du diamètre (D) extérieur de l'hélice (6).

6. Dispositif de propulsion suivant l'une des revendications 1 à 5,
**caractérisé**
**en ce qu**'une partie (2) cylindrique creuse de la partie (1) d'enveloppe est frettée sur le paquet (7) de tôles statoriques.
